# EUROPEAN PATENT APPLICATION

(11) **EP 3 141 894 A1**
(43) Date of publication of application: **15.03.2017**
(21) Application number: 15789114.4
(22) Date of filing: 19.03.2015
(51) Int. Cl.: G01N 30/72, G01N 27/62, G01N 30/02, G01N 30/26, G01N 30/56, G01N 30/88

(54) **METHOD, COLUMN, AND DEVICE FOR ANALYZING ORGANIC ACID BY MASS SPECTROMETRY**

(30) Priority: 08.05.2014 JP 2014096646
(71) Applicant: Showa Denko K.K., Tokyo 105-8518 (JP)
(72) Inventor: KONDO, Hideyuki, Tokyo 105-8518 (JP); SASUGA, Junji, Tokyo 105-8518 (JP); SHUKUYA, Takayuki, Tokyo 105-8518 (JP)
(74) Representative: Strehl Schübel-Hopf & Partner
(86) International application number: PCT/JP2015/058195
(87) International publication number: WO 2015/170516

(57) **Abstract**

A mass spectrometry method by a liquid chromatograph-mass spectrometer that can detect an organic acid with high sensitivity by retaining, separating and eluting the organic acid without adding any nonvolatile substance to a mobile phase and without receiving any restriction of a ratio of a water-soluble organic solvent, and an analytical column are provided. The mass spectrometry method is a mass spectrometry method for an organic acid by a liquid chromatograph-mass spectrometer, wherein a column packed with a hydrophilic polymer having an anion-exchange group is used, and as a mobile phase, a water-soluble organic solvent-water mixed solution is used. The analytical column is a column for liquid chromatography for an organic acid, in which a polyether ether ketone (PEEK) resin housing for liquid chromatography is packed with a hydrophilic polymer having an anion-exchange group.

## Description

### Technical Field

The present invention relates to a mass spectrometry method for an organic acid by a liquid chromatograph-mass spectrometer, wherein a column using, as a packing material, a hydrophilic polymer having an anion-exchange group is used, an analytical column packed with the packing material, and an analytical device.

### Background Art

Organic acids are added to foods as umami together with amino acid, saccharides, etc., and for example, succinic acid, malic acid and the like are used. In recent years, further, organic acids are used also as cleaning agents for electronic materials, etc. A demand for analysis of the organic acids has been increasing.

As an analytical device for organic acids, a liquid chromatograph has been used in the past, but development of a mass spectrometry method having higher sensitivity and having high identification ability has been desired.

In a separation part of a liquid chromatograph for the analysis of an organic acid, ion-exclusion chromatography has been widely used in the past. For example, in JP-A 1996-201365 (patent literature 1), a packing material in which a cation-exchange group has been introduced into a styrene/divinylbenzene copolymer that is a base material is used, and an organic acid can be retained in column and separated from a sample by a Donnan exclusion effect between a stationary phase and a mobile phase. In the method using such ion-exclusion chromatography, addition of an alkaline earth metal ion or a transition metal ion has been also carried out in order to control retention of the organic acid.

However, when the ion-exclusion chromatography is used in combination with a mass spectrometer, the cation-exchange group has low chemical stability and is liable to be detached from the base material. Therefore, in order to prevent detached, the mobile phase needs to be restricted particularly on the organic solvent concentration, and this sometimes becomes disadvantageous in increasing sensitivity of the mass spectrometry. Further, there are problems that in a sample containing plural organic acids, separation of the organic acids is difficult; control of a concentration of an alkaline earth metal ion or a transition metal ion added is not easy; addition of an alkaline earth metal ion or a transition metal ion is unsuitable for mass spectrometry; and moreover, impurities contained in a sample are not separated from an organic acid, and in the detection by a mass spectrometer, sensitivity is liable to be lowered by an ionization inhibitory effect of the impurities.

As a separation part of a liquid chromatograph for the analysis of an organic acid, ion chromatography is also known. For example, in JP-A 2009-192241 (patent literature 2), a column packed with a packing material in which a styrene/divinylbenzene copolymer, polyvinyl alcohol, polymethacrylate or the like is used as a base material and an anion-exchange group has been introduced into the base material is used. In the ion chromatography, however, a nonvolatile substance such as sodium carbonate or sodium hydroxide has to be added to the mobile phase, and therefore, when the ion chromatography is used in combination with a mass spectrometer, the nonvolatile substance sometimes exerts evil influence on the mass spectrometry because of lowering of ionization efficiency or clogging due to precipitation of a salt of an ion source.

If a suppressor is arranged on the downstream of a column, the nonvolatile substance is converted into a volatile substance such as carbonic acid or water. However, not only does the device become complicated but also there is a problem that the suppressor that is an expensive consumable part has to be exchanged periodically. In the case of mass spectrometry by an electrospray ionization method, further, a mobile phase having a high ratio of an organic solvent is generally necessary for increasing sensitivity, and therefore, there is complicatedness that an organic solvent has to be added immediately before the mass spectrometry is carried out.

In JP-A 2006-242944 (patent literature 3), a packing material for ion chromatography in which a quaternary ammonium salt group has been introduced into a base material composed of a polyvinyl alcohol-based resin is disclosed, but application of such a technique to a separation part of a liquid chromatograph-mass spectrometer for the analysis of an organic acid is not suggested.

### Citation List

### Patent Literature

Patent literature 1: JP-A 1996-201365
Patent literature 2: JP-A 2009-192241
Patent literature 3: JP-A 2006-242944

### Summary of Invention

### Technical Problem

The present invention has been made in the light of such circumstances as above, and it is an object of the present invention to provide a mass spectrometry method wherein in a separation part for mass spectrometry of an organic acid by a liquid chromatograph-mass spectrometer, addition of a nonvolatile substance to a mobile phase is not necessary, the selectively of a water-soluble organic solvent ratio is flexible, and the organic acid can be retained, separated and eluted and as a result the organic acid can be detected with high sensitivity, and to provide an analytical column.

### Solution to Problem

In order to solve the above problem, the present inventors have earnestly studied, and as a result, have found that the above problem can be solved by using, as a packing material, a hydrophilic polymer having an anion-exchange group, using this packing material as a stationary phase and using a water-soluble organic solvent-water mixed solution as a mobile phase, in a separation part for mass spectrometry of an organic acid by a liquid chromatograph-mass spectrometer. Further, the present inventors have found that by using, as a separation mode in liquid chromatography, a mixed mode of a combination of a hydrophilic interaction chromatography and ion-exchange chromatography and by retaining and separating various organic acids by means of a mobile phase containing a water-soluble organic solvent, the organic acids can be detected with high sensitivity in the mass spectrometry part, and they have accomplished the present invention.

Here, the hydrophilic interaction chromatography is a separation mode utilizing a difference in affinity between a packing material and a sample, the ion-exchange chromatography is a separation mode utilizing a difference in ion exchangeability between a packing material and a sample, and a preferred separation mode in the present application is a mixed mode simultaneously utilizing interaction due to affinity and interaction due to ion exchangeability.

That is to say, the present invention relates to the following matters.
[1] A mass spectrometry method for an organic acid by liquid chromatography-mass spectrometry using a liquid chromatograph-mass spectrometer, wherein a column using, as a packing material, a hydrophilic polymer having an anion-exchange group is used, and as a mobile phase, a water-soluble organic solvent-water mixed solution is used.
[2] The mass spectrometry method for an organic acid of [1], wherein a base material of the hydrophilic polymer having an anion-exchange group is polyvinyl alcohol.
[3] The mass spectrometry method for an organic acid of [1] or [2], wherein the anion-exchange group of the hydrophilic polymer having an anion-exchange group is a quaternary ammonium group, and the content of the quaternary ammonium group is 0.01 to 0.1 meq based on 1 g of the hydrophilic polymer.
[4] The mass spectrometry method for an organic acid of any one of [1] to [3], wherein the water-soluble organic solvent-water mixed solution is a solution containing the water-soluble organic solvent in an amount of 50 to 95% in terms of volume ratio.
[5] The mass spectrometry method for an organic acid of any one of [1] to [4], wherein the water-soluble organic solvent is at least one kind selected from the group consisting of acetonitrile, methanol, ethanol, isopropanol, acetone, methyl ethyl ketone and tetrahydrofuran.
[6] The mass spectrometry method for an organic acid of any one of [1] to [5], wherein the separation mode in the liquid chromatography is a mixed mode of a combination of hydrophilic interaction chromatography and ion-exchange chromatography, said method comprising detecting the organic acid by a mass spectrometer.
[7] A liquid chromatographic column for organic acid analysis, having a polyether ether ketone (PEEK) resin housing for liquid chromatography, said housing being packed with a hydrophilic polymer having an anion-exchange group.
[8] An analytical device comprising a liquid chromatographic column and a mass spectrometer, said liquid chromatographic column having a packing material containing a hydrophilic polymer having an anion-exchange group and a mobile phase using a mixed solution of a water-soluble organic solvent and water.

### Advantageous Effects of Invention

The mass spectrometry method for an organic acid according to the present invention is excellent in retention and separation of various organic acids because a column packed with a specific hydrophilic polymer is combined with a mobile phase, and in the mass spectrometry part, the organic acids can be detected with high sensitivity. Therefore, this mass spectrometry method is useful in a wide range of fields such as fields of foods, cosmetics, environment, agriculture, medicine and industrial materials, and particularly in the field of foods, this method is preferable as an analytical method for umami such as succinic acid and malic acid.

### Brief Description of Drawings

[Fig. 1] Fig. 1 shows mass chromatograms of organic acids in Example 1 obtained by liquid chromatography-mass spectrometry.
[Fig. 2] Fig. 2 shows mass chromatograms of organic acids in Example 2 obtained by liquid chromatography-mass spectrometry.
[Fig. 3] Fig. 3 shows mass chromatograms of organic acids in Comparative Example obtained by liquid chromatography-mass spectrometry.

### Description of Embodiments

The present invention will be described in more detail hereinafter.

An embodiment of the present invention is a mass spectrometry method for an organic acid by a liquid chromatograph-mass spectrometer, wherein by using a column using, as a packing material, a hydrophilic polymer having an anion-exchange group, by using a water-soluble organic solvent-water mixed solution as a mobile phase, and preferably in a mixed mode of hydrophilic interaction chromatography and ion-exchange chromatography, an organic acid is sufficiently retained, separated and eluted to analyze the organic acid with high sensitivity.

In the present application, the organic acid is an organic compound having a property of acidity, and such organic acids include carboxylic acid, sulfonic acid and phenols. As the organic acid that becomes an object substance of the present invention, carboxylic acid is preferable.

Examples of the organic acids that can be analyzed by the present invention include aliphatic carboxylic acids, aromatic carboxylic acids, hydroxycarboxylic acids and haloacetic acids. Specific examples of the aliphatic carboxylic acids include fumaric acid, maleic acid, malonic acid and succinic acid. Specific examples of the aromatic carboxylic acids include benzoic acid, phthalic acid, isophthalic acid, terephthalic acid and salicylic acid. Specific examples of the hydroxycarboxylic acids include aliphatic hydroxycarboxylic acids, such as lactic acid, glycolic acid, malic acid and tartaric acid. Specific examples of the haloacetic acids include monochloroacetic acid, dichloroacetic acid and trichloroacetic acid.

The method of the present invention can be preferably used for mass spectrometry of carboxyl group-containing compounds, e.g., aliphatic carboxylic acids and aliphatic hydroxycarboxylic acids, such as lactic acid, glycolic acid, fumaric acid, maleic acid, malonic acid, succinic acid, malic acid and tartaric acid. The present invention is a method comprising separating various organic acids by liquid chromatography and then mass-separating ions having been produced in an ion source of a mass spectrometer, in the mass separation part on the basis of a mass-to-charge ratio to detect the organic acids. The method of the present invention can be used as a high-sensitivity analytical method in various fields such as fields of foods, cosmetics, environment, agriculture, medicine and industrial materials.

As the ion sources, ion sources corresponding to an electrospray ionization method, an atmospheric pressure chemical ionization method, etc. can be mentioned. As the mass separation part, a mass separation part of quadrupole type, ion trap type, time of flight type or the like can be mentioned.

In the organic acid analysis in the present invention, any types of the ion sources and the mass separation parts can be used without any restriction. For ionization of organic acids, an electrospray ionization method is suitable, and in order to carry out measurement with higher sensitivity, it is preferable to raise the water-soluble organic solvent ratio (described later) in a mobile phase and to regulate at a flow rate of 0.1 to 1.0 ml/min of mix solution of the mobile phase.

As the hydrophilic polymer having an anion-exchange group for use as the packing material in the present invention, there can be mentioned a hydrophilic polymer in which a polymer having hydrophilicity, such as polyvinyl alcohol or polyhydroxy methacrylate, preferably polyvinyl alcohol, is used as a base material and into the base material an anion-exchange group such as a quaternary ammonium group has been introduced in an amount of, for example, 0.01 to 0.1 meq, preferably 0.01 to 0.07 meq, more preferably 0.01 to 0.05 meq, based on 1 g of the polymer, directly or through a spacer, such as epichlorohydrin, 1,4-butanediol diglycidyl ether, ethylene glycol diglycidyl ether or glycerol diglycidyl ether. If the amount of the anion-exchange group is less than 0.01 meq, the ion exchange action is sometimes lowered. If the amount thereof is more than 0.1 meq, the ion exchange action becomes too strong, and there is a possibility of adsorption of an organic acid by the column.

The hydrophilic polymer having an anion-exchange group can be prepared in accordance with a process described in, for example, JP-A 2006-242944 (patent literature 3).

In the present invention, the spacer refers to a site of chemical bonding used for adjusting a distance between the base material and the anion-exchange group such as a quaternary ammonium group. The spacer is used for imparting functions to inhibit interference between an ion and the base material and to inhibit peak diffusion. When the base material is a substance having a hydroxyl group, the spacer is preferably a divalent organic residue having ether linkages at both ends, and examples of such spacers include the aforesaid ones.

Examples of the quaternary ammonium groups include trimethylammonium group, triethylammonium group, N,N-dimethylallylammonium group and N,N-dimethylbenzylammonium group.

There is no limitation on the material, the size and the shape of the packing material of the present invention. However, in order to obtain sufficient separation performance and high sensitivity, the shape of the packing material is preferably a spherical shape having a volume-average particle diameter of 1 to 30 µm, and is more preferably a spherical shape having a volume-average particle diameter of 3 to 10 µm. Further, the packing material preferably has a strength to withstand a pressure of 1 to 30 MPa. The volume-average particle diameter is measured by a Coulter counter.

As the mobile phase for use in the mass spectrometry method for an organic acid according to the present invention, a water-soluble organic solvent-water mixed solution, that is, a mixture of water and an organic solvent, can be used.

The water-soluble organic solvent in the present application is not specifically restricted as long as it is an organic solvent having compatibility with water, and for example, an organic solvent of 1 to 5 carbons atoms having compatibility with water, etc. can be mentioned. The organic solvent of 1 to 5 carbon atoms means that the number of carbon atoms in the solvent molecule is 1 to 5.

The solvent is, for example, a solvent selected from the group consisting of alcohol-based solvents, such as methanol, ethanol and propanol, ether-based solvents, such as tetrahydrofuran, nitrile-based solvents, such as acetonitrile, ketone-based solvents, such as acetone, amide-based solvents, such as dimethylformamide, and sulfoxide-based solvent, such as dimethyl sulfoxide. These low-molecular weight solvents may be used singly, or may be used as a mixed solvent of two or more kinds.

As preferred water-soluble organic solvents, nitriles, such as acetonitrile, alcohols, such as methanol, ethanol and isopropyl alcohol, ethers, such as tetrahydrofuran, and ketones, such as acetone and methyl ethyl ketone, can be used. Water and the water-soluble organic solvent can be mixed in an arbitrary ratio. However, in order to achieve improvement in retention force due to hydrophilic interaction and increase in sensitivity in the mass spectrometer, the ratio of the water-soluble organic solvent mixed is preferably 50 to 95% byvolume, more preferably 55 to 95% byvolume, most preferably 60 to 90% by volume, in the total amount of the mixed solution. If the ratio of the water-soluble organic solvent is lower than 50% by volume, the hydrophilic interaction is sometimes lowered, and if the ratio thereof is higher than 95% byvolume, the organic acid is sometimes adsorbed in the column.

To the mobile phase, a substance having volatility, such as ammonium formate or ammonium acetate, can be added in an arbitrary ratio, and for example, such a substance can be added in an amount of 1 to 100 mmol based on 1 L of the mixed solution.

By the addition of such a substance, control of the retention time becomes possible.

The column for liquid chromatography analysis of an organic acid according to the present invention is a column packed with a hydrophilic polymer having an anion-exchange group. In order to sufficiently suppress adsorption of an organic acid by a metal, the material of the column housing is preferably a polyether ether ketone (PEEK) resin.

There is no specific limitation on the size of the housing. However, because of flow rate limitation in the mass spectrometer and in order to carry out analysis with higher separation performance and higher sensitivity, the inner diameter is preferably 1.0 to 4.6 mm, and the length is preferably 100 to 250 mm.

The analytical device according to the present invention includes a liquid chromatographic column having a packing material containing a hydrophilic polymer having an anion-exchange group and a mobile phase using a mixed solution of a water-soluble organic solvent and water, and includes a mass spectrometer.

### Examples

The present invention is described in more detail with reference to the following examples, but is should be construed that the present invention is in no way limited to those examples.

### (Example 1)

As a liquid chromatograph-mass spectrometer, LCMS-8030 (manufactured by Shimadzu Corporation) having, as an ion source, an electrospray ionization ion source and having a mass separation part of quadrupole type was used.

Analysis of various organic acids was carried out in a mixed mode of a combination of hydrophilic interaction chromatography and ion-exchange chromatography, as a separation mode. As a detection mode, selective ion monitoring was used, and a deprotonated molecule of each organic acid was detected.

As a column, Shodex RSpak JJ-50 2D (inner diameter: 2.0 mm, length: 150 mm, housing material: polyether ether ketone resin) packed with a polyvinyl alcohol resin (particle diameter: 5 µm) in which a quaternary ammonium group had been introduced as an anion-exchange group in such a manner that the content of the quaternary ammonium group had become 0.03 meq/g (polymer) was used, and the column temperature was set at 30°C.

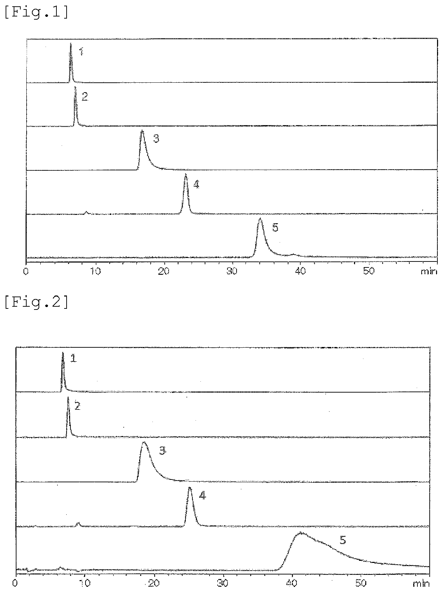

As a mobile phase, a mixed liquid of an ammonium formate aqueous solution of 100 mmol/L and acetonitrile in a ratio by volume of 30/70 (ammonium formate aqueous solution/acetonitrile) was passed through the column, and 5 µL of a liquid obtained by adding lactic acid, glycolic acid, malonic acid, succinic acid and malic acid in each amount of 5 µg/ml to a mixed liquid of water/acetonitrile in a ratio by volume of 50/50 was injected into the aforesaid liquid chromatograph-mass spectrometer. The resulting mass chromatograms are shown in Fig. 1. Five kinds of the organic acids were each distinctly separated.

### (Example 2)

Five kinds of organic acids of lactic acid, glycolic acid, malonic acid, succinic acid and malic acid were analyzed under the same conditions as in Example 1, except that stainless steel was used as a housing material instead of the polyether ether ketone resin. The resulting mass chromatograms are shown in Fig. 2. Five kinds of the organic acids were each distinctly separated, but as compared with Example 1, influence of adsorption by the stainless steel was observed on the peak shape.

### (Comparative Example)

Using the liquid chromatograph-mass spectrometer used in Examples and using ion-exclusion chromatography as a separation mode, analysis of various organic acids was carried out. As a detection mode, selective ion monitoring was used, and a deprotonated molecule of each organic acid was detected. As a column, a column for organic acid analysis, Shodex RSpak KC-811 (inner diameter: 8.0 mm, length: 300 mm, housing material: stainless steel) (manufactured by Show a Denko K.K.) packed with a styrene/divinylbenzene copolymer resin (particle diameter: 6 µm) into which a sulfo group had been introduced as a cation-exchange group was used, and the column temperature was set at 40°C.

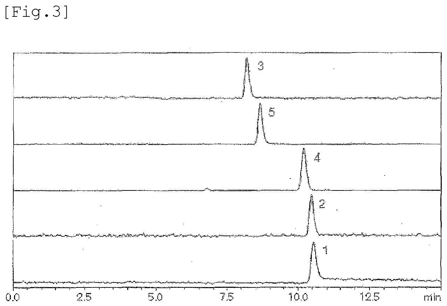

As a mobile phase, an aqueous solution obtained by mixing water with formic acid in a ratio by volume of 100/0.1 (water/formic acid) was passed through the column at a rate of 0.8 ml/min, and 5 µL of an aqueous solution containing lactic acid, glycolic acid, malonic acid, succinic acid and malic acid in each amount of 5 µg/ml was injected into the aforesaid liquid chromatograph-mass spectrometer. Chromatograms obtained by the mass spectrometer are shown in Fig. 3. Separation of succinic acid, glycolic acid and lactic acid was more insufficient than in the examples, and besides, a result of lowering of a signal/noise ratio, that is, detection sensitivity, was observed.

In each of Figs. 1 to 3, numeral 1 designates a peak of lactic acid, numeral 2 designates apeak of glycolic acid, numeral 3 designates a peak of malonic acid, numeral 4 designates a peak of succinic acid, and numeral 5 designates a peak of malic acid. The examples and the comparative example differ from each other in the technique for separation, and therefore, they differ from each other in the order of elution.

### Reference Signs List

1: peak of lactic acid
2: peak of glycolic acid
3: peak of malonic acid
4: peak of succinic acid
5: peak of malic acid

## Claims

1. A mass spectrometry method for an organic acid by liquid chromatography-mass spectrometry using a liquid chromatograph-mass spectrometer, wherein a column using, as a packing material, a hydrophilic polymer having an anion-exchange group is used, and as a mobile phase, a water-soluble organic solvent-water mixed solution is used.

2. The mass spectrometry method for an organic acid as claimed in claim 1, wherein a base material of the hydrophilic polymer having an anion-exchange group is polyvinyl alcohol.

3. The mass spectrometry method for an organic acid as claimed in claim 1 or 2, wherein the anion-exchange group of the hydrophilic polymer having an anion-exchange group is a quaternary ammonium group, and the content of the quaternary ammonium group is 0.01 to 0.1 meq based on 1 g of the hydrophilic polymer.

4. The mass spectrometry method for an organic acid as claimed in any one of claims 1 to 3, wherein the water-soluble organic solvent-water mixed solution is a solution containing the water-soluble organic solvent in an amount of 50 to 95% in terms of volume ratio.

5. The mass spectrometry method for an organic acid as claimed in any one of claims 1 to 4, wherein the water-soluble organic solvent is at least one kind selected from the group consisting of acetonitrile, methanol, ethanol, isopropanol, acetone, methyl ethyl ketone and tetrahydrofuran.

6. The mass spectrometry method for an organic acid as claimed in any one of claims 1 to 5, wherein the separation mode in the liquid chromatography is a mixed mode of a combination of hydrophilic interaction chromatography and ion-exchange chromatography, said method comprising detecting the organic acid by a mass spectrometer.

7. A liquid chromatographic column for organic acid analysis, having a polyether ether ketone (PEEK) resin housing for liquid chromatography, said housing being packed with a hydrophilic polymer having an anion-exchange group.

8. An analytical device comprising a liquid chromatographic column and a mass spectrometer, said liquid chromatographic column having a packing material containing a hydrophilic polymer having an anion-exchange group and a mobile phase using a mixed solution of a water-soluble organic solvent and water.
